# EUROPEAN PATENT SPECIFICATION

(11) **EP 0 770 328 B1**
(45) Date of publication and mention of the grant of the patent: **05.09.2001**
(21) Application number: 96202849.4
(22) Date of filing: 15.10.1996
(51) Int. Cl.: A21B 3/13, G06K 9/00, G06K 7/08

(54) **Method for determining type of dough tray, dough processing line and dough tray**
Verfahren zur Bestimmung des Teigträgertyp; Teigbearbeitungsstrasse und Teigträger
Méthode pour déterminer le type d'un support de pâte; ligne de traitement de pâte et support de pâte

(30) Priority: 26.10.1995 NL 1001507
(43) Date of publication of application: 02.05.1997
(73) Proprietor: Kaak, Johan Hendrik Bernard, 7011 DZ Gaanderen (NL)
(72) Inventor: Pasch, Lothar, 7061 WV Terborg (NL)
(74) Representative: De Hoop, Eric

(56) References cited:
- EP-A- 0 633 207
- DE-A- 3 930 946
- PATENT ABSTRACTS OF JAPAN vol. 4, no. 74 (P-013), 30 May 1980 & JP-A-55 039080 (TOSHIBA), 18 March 1980,
- PATENT ABSTRACTS OF JAPAN vol. 18, no. 363 (M-1635), 8 July 1994 & JP-A-06 094375 (MURATA), 5 April 1994,

## Description

The present invention relates to a dough tray containing a number of dough tins and a mounting franne around the dough tins, said mounting frame being provided with flanges.

For automatically processing dough in a dough processing line, through which several types of dough trays are transported, it is important to be able to determine which type of dough tray is located at a certain position. Thus when filling a dough tray with dough, for instance, it is essential to know how many dough tins the dough tray contains and which size and shape they are. Apart from that, the information about the type of dough tray is of importance when selecting a certain baking process or determining the position of a tray in the line, for example.

It is an object of the present invention to provide a dough tray, the type of which can be determined in a cheap and reliable way by an inductive measuring system.

To this end a dough tray of the type mentioned above is according to the invention, characterized in that the mounting frame is provided with a number of induction varying signs, which together form a code for identifying the dough tray, said induction varying signs are cams pressed in outward direction in the mounting frame of the dough tray. Because the signs on the mounting frame, which indicate the dough tray type are inductively detected, determining the dough tray type is almost insensitive to possible soiling of the signs and insensitive to the prevailing operating conditions. Since the induction varying signs are formed by pressing cams in outward direction in the mounting frame of the dough tray, an integrated whole is obtained with a minimal number of components.

It is known per se from Patent Abstracts of Japan, Vol. 4, no. 74 (P-013) to determine the type of a container by detecting variations in the electromagnetic field.

Detecting variations in the electro-magnetic field which are not a result of a dough tray moving past the position and which might end in a faulty or fictitious definition, is almost entirely avoided as the induction varying reference signs are arranged on the mounting frame of the dough tray. As a result hereof it is possible to detect the variation in the electro-magnetic field by the measuring sensors only when variations in the electro-magnetic field caused by the reference signs have been detected.

Preferably the height of the signs is smaller than or equal to the height of flanges of the mounting frame, so that the cams do not detrimentally affect the transport of the dough tray through the dough processing line. Preferably the cams are as high as possible to level out the differences in height in the tray.

By way of example some embodiments of a dough tray according to the present invention will now be described on the basis of the accompanying drawing, in which:
fig. 1 schematically shows a top view of a dough tray,
fig. 2 schematically shows a cross section of a known mounting frame of a dough tray,
fig. 3 schematically shows a cross section of a mounting frame of an inventive dough tray,
fig. 4 schematically shows a side view of a part of a mounting frame of an inventive dough tray,
fig. 5 schematically shows a side view of a part of a mounting frame of an alternative dough tray according to the invention, and
fig. 6 schematically shows a top view of a part of a dough processing line.

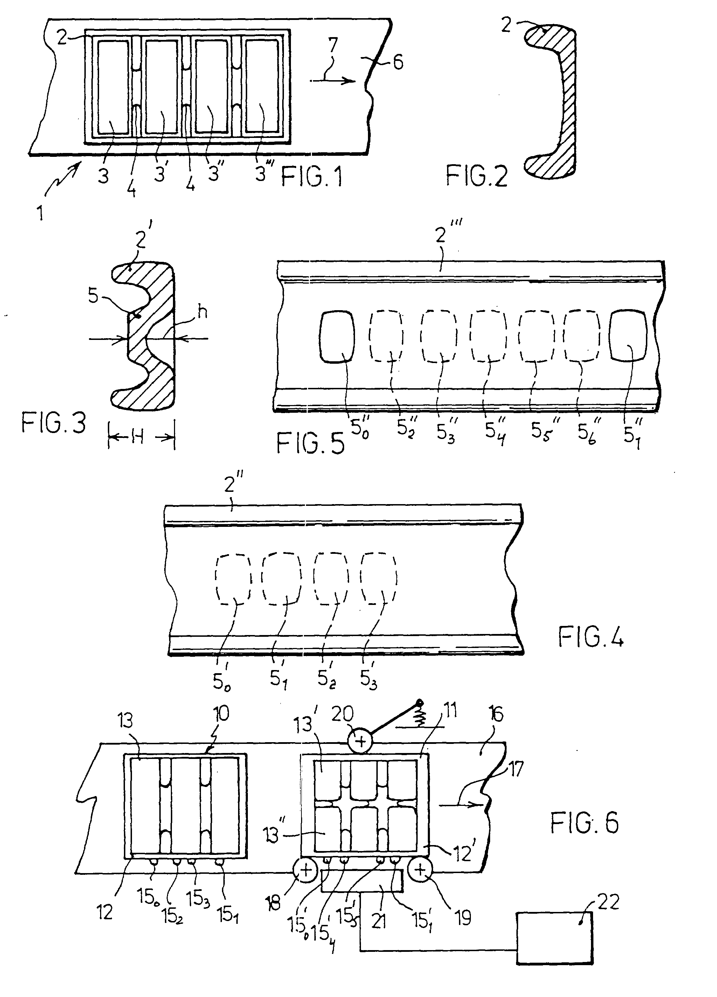

In figure 1 a dough tray 1 is schematically shown containing a number of dough tins 3, 3', 3'', 3''' and a mounting frame 2 around and attached to the dough tins. Mounting members 4 ensure additional attachment between the dough tins themselves and also serve as spacing members. Although four dough tins 3, 3', 3'', 3''' are shown in figure 1, a dough tray can have any desired number of dough tins, various sizes and shapes, such as rectangular, oval and round also being possible. The dough tray 1 is transported on a conveyor belt 6 of a dough processing line in a transport direction 7.

The dough trays and the mounting frame are both usually made of metal, the mounting frame sometimes being provided with flanges, such as schematically shown in cross section in figure 2.

In a dough processing line in which various dough processes are carried out and through which various types of dough trays are transported, it is of importance for carrying out the correct process to determine which dough tray type will at a certain moment be present at a certain position on the dough processing line.

Different methods for determining the dough tray type are possible. Thus, by means of a camera and suitable pattern identification software, an attempt can be made to identify the shape of a dough tray at a certain position. This method is not only expensive, however, but the camera is also sensitive to soiling and the identification pattern on the tray itself, as a result of which a dough tray cannot be unambiguously identified. It should be noted that the various dough processes which can take place in a dough processing line vary from freezing dough at approximately -40°C to baking dough to approximately +280°C. As a result operational circumstances come about locally, hindering the determination of the type of dough tray by means of pattern identification.

Another possible method would be applying a bar code to the dough tray which can be detected by means of photo sensors. Not only is this method sensitive to soiling, in particular of the photo sensors, but the bar code arranged on the dough tray is not sufficiently heat resistant and can consequently fall off the dough tray or lead to undesirable alterations. Dough trays are moreover cleaned regularly as a result of which there is a risk that the bar code is undesirably altered or removed.

Although to a certain extent satisfactory, disadvantages are attached to the optical determination of the dough tray type.

According to the invention a possibility is offered for determining the dough tray type, which is at a certain position in a dough processing line, in a relatively cheap and reliable way, this way being virtually independent of the prevailing operational circumstances.

According to the invention induction varying signs 5 are arranged for this purpose on the mounting frame 2' of a dough tray, as is schematically shown in figure 3. These induction varying signs are formed by a number of projecting cams, the number being adequate for indicating the number of possible dough tray types. If the mounting frame 2' has flanges of a height H then it is preferable if the induction varying signs or cams 5 have a height h which is smaller than or preferably equal to the height H of the flanges, so that the signs cannot hinder handling or transporting the dough trays.

In the embodiment shown in figure 4 the possible number of cams to be arranged on the mounting frame 2'' is four. The cams can be arranged on one or more of the positions 5₀', 5₁', 5₂', 5₃'. The position and the number, in this case a maximum of four cams to be arranged provides a certain code belonging to a certain type of dough tray, so that this code can be detected by an inductive measuring system to be described below.

The cams are formed in the mounting frame by pressing in an outward direction, so that the number of separate components as well as the costs are reduced.

Preferably induction varying reference signs 5₀'' and 5₁'' are arranged on the mounting frame 2''', as figure 5 shows. These reference signs serve the purpose, to be described below, of indicating to the inductive measuring system that a dough tray is correctly positioned on the measuring place, after which the detecting of the other signs, which can be on one or more of the positions 5₂'', 5₃'', 5₄'', 5₅'' or 5₆'', can take place. In this way detecting errors, for example as a result of incorrect dough tray orientation or undesirable accidental disturbances, can be avoided.

Although the induction varying signs shown in the exemplary embodiments are cams with the same dimensions, other signs are also suitable for differentiating between different dough tray types. Signs with different dimensions can be used, each of which generates a separate induction. Along with that the induction varying signs can be made of different metals, for example, which generate a different induction variation in the measuring system.

In figure 6 a top view of a part of the dough processing line is shown schematically. The dough processing line contains a conveyor belt 16 which transports the dough trays 10, 11 in a transport direction 17. The dough processing line contains an inductive measuring system 21 with a suitable number of measuring sensors. The measuring system 21 is positioned at a position on the dough processing line where a particular processing, for example filling the dough tins 13, 13', 13'' with dough, takes place. The inductive measuring system 21 generates an electro-magnetic field of sufficient magnitude, so that the induction varying signs of the dough trays 10, 11 transported on the conveyor belt 16 go through the electro-magnetic field. If a dough tray 11 is moved past the position, then the measuring sensors detect a variation in the electro-magnetic field, this variation being a function of the number and the position of the signs 15₄' and 15₅', the reference signs 15₀' and 15₁' informing the measuring system 21 that a dough tray is at the correct position and the actual detecting of the variation in the electro-magnetic field can take place. The variation in the electro-magnetic field can be displayed to an operator in charge of the dough processing line, who then activates the operations needed for that type of dough tray, or can be passed on to a machine which then performs the action automatically.

Preferably the measuring system 21 contains a memory 22, in which a number of predetermined variations in the electro-magnetic field are stored, each variation being indicative for a certain type of dough tray, and a comparator, in this case integrated with the memory 22, which compares the detected variations with the stored variations. Depending on the result of the comparison, the processes in question can be automatically activated.

In this way the measuring system 21 can in a relatively cheap and reliable way make a distinction between a dough tray 11 with six smaller dough tins 13', 13'' and signs 15₄', 15₅' and a dough tray 10 with three larger dough tins and signs 15₂, 15₃.

In order to make the observations even more reliable and independent of the size differences of the dough trays, the dough processing line preferably contains guiding rolls 18 and 19 for guiding the dough trays and at least one pressure roll 20, which transports the dough trays in the direction of the measuring sensors, along the measuring sensors.

## Claims

1. Dough tray (1) containing a number of dough tins (3) and a mounting frame (2) around the dough tins (3), said mounting frame being provided with flanges, **characterized in that** the mounting frame is provided with a number of induction varying signs (5), which together form a code for identifying the dough tray, said induction varying signs being cams pressed in outward direction in the mounting frame of the dough tray.

2. Dough tray according to claim 1, in which the mounting frame is provided with flanges, **characterized in that** the height (4) of the cams is smaller than or equal to the height of the flanges.

3. Dough tray according to claim 1 or 2, **characterized in that** induction variation reference signs are arranged on the mounting frame (2) of the dough tray.

## Patentansprüche

1. Teigtopf (1) umfassend eine Anzahl Teigbleche (3) und einen Befestigungsrahmen (2) rund um die Teigbleche (3), wobei der Befestigungsrahmen (2) mit Bördelkanten versehen ist, **dadurch gekennzeichnet**, daß der Befestigungsrahmen mit einer Nummer induktionsändernde Merkzeichen (5), die zusammen einen Kode zum ldentifizieren des Teigtopfs bilden versehen ist, wobei die induktionsändernden Merkzeichen Nocken sind die in auswärtse Richtung in dem Befestigungsrahmen des Teigtopfs gedrückt sind.

2. Teigtopf gemäß Anspruch 1, wobei der Befestigungsrahmen mit Bördelkanten versehen ist, **dadurch gekennzeichnet**, daß die Höhe (H) der Nocken kleiner oder gleich an der Höhe der Bördelkanten ist.

3. Teigtopf gemäß Anspruch 1 oder 2, **dadurch gekennzeichnet**, daß die induktionsändernden Merkzeichen auf dem Befestigungsrahmen (2) des Teigtopfs angeordnet sind.

## Revendications

1. Plateau pour pâte (1) contenant un certain nombre de boîtiers de pâte (3) et un cadre de montage (2) autour des boîtiers de pâte (3), ledit cadre de montage étant muni de rebords, **caractérisé en ce que** le cadre de montage est muni d'un certain nombres de marques de variation d'induction (5), qui ensemble forment un code pur identifier le plateau pour pâte, lesdites marques de variation d'induction étant cames qui sont pressées dans la direction vers l'extérieur dans le cadre de montage du plateau pour pâte.

2. Plateau pour pâte selon le revendication 1, dans lequel le cadre de montage est muni de rebords, **caractérisé en ce que** la hauteur (H) des cames est plus petite ou égale à la hauteur des rebords.

3. Plateau pour pâte selon la revendication 1 ou 2, **caractérisé en ce que** les marques de référence de variation d'induction sont disposées sur le cadre de montage (2) du plateau pour pâte.
